(19) Europäisches Patentamt

European Patent Office

Office européen des brevets

(11) **EP 0 838 050 B1**

(12) **EUROPEAN PATENT SPECIFICATION**

(45) Date of publication and mention
of the grant of the patent:
**19.04.2000 Bulletin 2000/16**

(21) Application number: **96920963.4**

(22) Date of filing: **24.06.1996**

(51) Int Cl.$^7$: **G06F 1/00**

(86) International application number:
**PCT/GB96/01515**

(87) International publication number:
**WO 97/02522 (23.01.1997 Gazette 1997/05)**

(54) **METHOD OF AUTHENTICATING DIGITAL DATA WORKS**

VERFAHREN ZUR BEGLAUBIGUNG DIGITALER DATENWERKE

PROCEDE D'AUTHENTIFICATION DE TRAVAUX INFORMATIQUES NUMERIQUES

(84) Designated Contracting States:
**DE FR GB IT**

(30) Priority: **03.07.1995 GB 9513790**

(43) Date of publication of application:
**29.04.1998 Bulletin 1998/18**

(73) Proprietor: **Signum Technologies Limited
Cheltenham, Gloucestershire GL50 1NW (GB)**

(72) Inventor: **HILTON, David
Gloucestershire GL51 8HF (GB)**

(74) Representative: **Langley, Peter James
Origin Limited,
Intellectual Property Consulting,
24 Kings Avenue
London N10 1PB (GB)**

(56) References cited:
**EP-A- 0 638 860          US-A- 4 727 544
US-A- 5 442 645**

- **ELECTRONICS & COMMUNICATIONS IN JAPAN,
PART I - COMMUNICATIONS, vol. 73, no. 5, PART
I, 1 May 1990, pages 22-33, XP000159282
KOMATSU N ET AL: "A PROPOSAL ON DIGITAL
WATERMARK IN DOCUMENT IMAGE
COMMUNICATION AND ITS APPLICATION TO
REALIZING A SIGNATURE"**

**Description**

<u>Field of the invention</u>

This invention relates to a method of authenticating digital data works, particularly to enable any unauthorised alterations to that work to be rendered readily detectable.

<u>Description of the Prior Art</u>

Systems based upon digital data are becoming universal and indispensable; digital data passing between computers; digital telecommunications; digital audio; digital cameras; and the convergence of many of these individual components into multi-media, are a selection of the technologies to which this invention relates.

There are many applications for a technique that can enable any unauthorised alterations to that work to be rendered readily detectable. For example, it is today very easy to tamper with a digital photograph, rendering the authenticity of any digital photograph questionable. That will have serious implications for the use of digital photographic evidence in criminal litigation, for example. It may therefore be advantageous to be able to assert that the integrity of any given digital photograph can be assured. Similarly, it is becoming common to archive documents, including legal contracts and financial instruments, by imaging and storage on non-erasable digital media, such as WORM. There is a pressing need to ensure that those digital records are tamper evident. There are similar issues pertaining to digital audio and video. For example, where digitally recorded speech is to be used in evidence, typically to confirm the existence and terms of an oral agreement, then validation of the integrity of the recording is particularly helpful.

There are various established approaches to ensuring data integrity in the telecommunications and digital audio field; for example, the use of error correction techniques relying upon check-sums. However, these techniques are designed to ensure that a digital signal generated by a device, for example, a CD player, is an accurate transmission or reproduction from a source, for example the data stored within the CD. That is different from being able to detect if, without access to the original CD, any duplicate made of the CD is a completely accurate reproduction of the original CD.

The present invention is directed to solving this latter problem. Hence, the present invention is not directed to manipulating small units of digital data to enable that data to carry information inherent to the proper comprehension of the digital data itself but instead to modifying various sub-sets within a digital data work in such a way that any subsequent unauthorised modification or alteration to any of those sub-sets is readily detectable.

Currently, it is possible to include a simple identifier in the header of the data file of a digital data work. The header might typically comprise a checksum derived from the contents of the data file so that any alteration of the contents inevitably leads to a mismatch with the checksum; the mismatch can readily be detected, enabling the alteration to be detected. However, it can be relatively easy to strip out the header checksum entirely, in which case one could not establish the integrity of the data.

EP-A-0 402 210 suggests a method of authenticating a digital data work by dividing the digital data work into blocks. For each block, a signature is derived using an algorithm. The signatures are stored in a portable object. When the digital data work is opened its signature is derived using the same algorithm. If the data have been altered, the application of said algorithm results in a different signature.

<u>Statement of the invention</u>

In accordance with the present invention, a method of authenticating a digital data work, to enable any unauthorised alteration to that work to be readily detectable, comprises the steps of dividing the whole or part of the work into sets of data elements with each data element or set of data elements having a measurable characteristic, selecting a particular set of data elements and then modifying a pre-determined sub-set of the data elements in that set so that the measurable characteristic of that pre-determined sub-set, or the data elements in that sub-set, satisfies a pre-determined relation, the measurable characteristic of any sub-set, or the data elements in that sub-set, being measurably changed if any data element of that sub-set is altered.

Hence, the essence of the invention is to enable the integrity or authenticity of a digital data work to be established by changing the digital data work according to a particular algorithm so that some or all of its constituent parts possess a measurable characteristic; that measurable characteristic is changed if any alterations to the digital data work are subsequently carried out. That change can then be detected using a detection process.

By way of example, if the digital data work is a rectangular photographic image, that work might be subdivided into smaller rectangles; for a particular such smaller rectangle, a sub-set of the data elements making up that smaller rectangle could be selected according to a rule derived from a private key. Some of these selected elements might then be modified so that a particular relationship is satisfied by them; for instance, that the sum of their values [where relevant] is a multiple of 7. The same rectangle could then be divided into a different set of elements which may or may

EP 0 838 050 B1

not overlap the first set. Some of the values of the data elements might then be modified to satisfy a further relationship. However, where this is the case, and the two sets of elements within the same rectangle overlap, then the further modification must preserve the first relationship. Every element of each small rectangle should preferably form part of at least one set of data elements. In a preferred embodiment, every element of each small rectangle must form part of at least one set of data elements. This ensures that no pixel can escape checking. The process of modification according to a particular rule is carried out on preferably all the rectangles into which the image is divided.

More generally, the digital data work may be divided into convenient sets of data elements, the members of which may then be modified according to a required algorithm. In the case of audio data, for example, the digital signals may be split into sets of amplitude signal levels of any suitable length. These sets of data elements can then be sub-divided into individual data elements, with a subsequent modification to those individual data elements as described above.

It is important that the method of sub-division, i.e. selection of the actual data elements in a particular set of data elements to be modified, is private, as should the relationships to be obeyed by the modified data elements. Commonly, each will be known only to the originator of the digital data work, or alternatively some person unconnected in any way with the work itself. For example, in the case of photographic equipment designed to produce photographs for evidential purposes, e.g. security cameras, it may be only the manufacturer of the equipment who knows the method of sub-division and the relationships obeyed by the modified data elements. Either or both of the method of sub-division and the relationships obeyed by the modified data elements may preferably be derivable from a key selected by the manufacturer or originator. It will then be highly improbable that anyone might by chance modify the digital data work in a way that results in various data elements satisfying the predetermined relationship. Further, the key could also be formed from two different constituent keys, each constituent key being held by a different party. Only when both parties co-operate can a validation process then be performed.

Detailed Description

The detailed description that follows is in respect of an embodiment of the invention that relates to digitised images.

For the sake of simplicity, it is supposed that the image concerned is rectangular and sub-divided into sets of smaller rectangles, $r_1$, $r_2$, $r_3$, ....$r_n$. The only theoretical restriction on the sub-divisions is that they should divide the data in a repeatable way, as in a tessellation.

Suppose that each rectangle, $r_i$, contains **m** members $r_{11}$, $r_{12}$, $r_{13}$, ......$r_{1m}$. Each of these members has one or more measurable characteristics. In the case of contone images these would usually be numbers between 0 and 255, that is numbers requiring 8 bits of binary data to represent them. These numbers correspond roughly to the intensity of colours in the element. Again, for the sake of simplicity, it will be assumed that the only one such number is present for each element and that this describes a position on a greyscale, that is an indication of how nearly black or white an element is.

Anyone wishing to ensure the integrity of the data would select a key which typically could be a number between 0 and 100,000,000. This key would be known only to the originator. This key is used to derive an algorithm which is used as described below.

First, a choice is made of the size of the rectangles $r_1$, $r_2$, $r_3$, ....$r_n$. For a given rectangle, $r_i$, a selection of the elements $s_1$, $s_2$, $s_3$,...... $s_n$, is then made according to a scheme derived from the key. These elements have corresponding values $v_1$, $v_2$, $v_3$, .....$v_n$.

An arithmetic relationship is derived from the key according to previously defined rules. This is a relationship which the values $v_i$ must satisfy. The choice of type of relationship is considerable, ranging from primitive requirements, such as the sum of elements being even, or the sum of the individual bits of a binary representation of the numbers being a given multiple, through to complicated functional relationships. In order to satisfy these relationships, some or all of the values of $v_n$ must be adjusted.

Two major considerations influence the choice of relationships. The first is that the probability of the data satisfying the relationship without any adjustment must be small.

Secondly, the adjustments required must not be large for any element and only a small proportion of values should need to be changed. This latter requirement is necessary to ensure that the data work suffers no significant loss of information.

A second set of elements $t_1$, $t_2$, $t_3$......$t_n$. is chosen from the members of $r_i$. This set, as before, will be required to satisfy a set of relationships, with the same criteria for acceptability. This process continues until every member of $r_i$ has appeared in at least one selected set. The simplest version of this process is, of course, the division of the rectangle into two non-intersecting sets.

The process is now repeated for every one of the **n** rectangles, so that the values of every element of the image have been related to the values of some other elements.

The method of detection is virtually the inverse process. Detection can only take place if the originator's key is known, because that information is necessary to generate the appropriate sets and relationships. If part of an image has been tampered with in any way, the relationships on one or more of the rectangles $r_i$ will not be satisfied. If the image has been cropped it may be necessary for the detector to spend some time locating the correct origins of the rectangles ri, but there should be no doubt when the correct position has been discovered because, except in the case of gross distortion of the image, the relationship will be satisfied on the majority of the rectangles of the set.

The nature of the method is unchanged if data is sequential, as in the case of audio data or video recordings. There will again be the division of data in a repetitive manner and adjustment to satisfy prescribed relationships.

Further Illustrative Example

There now follows a further detailed example of the present invention. For simplicity, the scale of the following example is smaller than would be used in actual situations.

Stage 1: Choice of Key

Any user of an image validation scheme in accordance with this invention is provided with a key. The key is used to carry out the initial validation of the image and to check that no subsequent alterations have been made. In this further example, we assume that the chosen key, **k**, must be in the range 1 to 10000. From this key various numbers must be deduced for various parts of the validation process. The only real requirement is that, whatever method is used, each key will give its own unique validation process. As an example, a number $k_s$, is required to govern the selection of a subset from a rectangular array which represents part of an image. If this number is required in the range 0 to 49, an arbitrary prescription might be to permute the digits of the key in a predefined manner, divide the resulting number by 50 and take the remainder. The set of possible prescriptions is vast.

Stage 2: Division of Rectangles

The image array is divided into rectangles. In this illustration, these are 4x4 squares, $r_1, r_2, r_3,......$ Suppose that $r_1$ is the array indicated below:

$$
\begin{array}{cccc}
5 & 8 & 3 & 1 \\
4 & 9 & 6 & 6 \\
2 & 9 & 7 & 6 \\
7 & 2 & 7 & 2 \\
\end{array}
$$

Stage 3: Selection of sub-sets

The array $r_1$ is sub-divided into sets $s_1, s_2, s_3, s_4$. The method of subdivision consists of the following two steps.

Step 1: Choice of permutation

Since there are 4 members to each of the sets s, we consider permutations of 4 objects. Given a set a,b,c, d, an arbitrarily chosen permutation of the set can be described by the notation:

$$
P = \begin{array}{cccc} 1 & 2 & 3 & 4 \\ 3 & 1 & 4 & 2 \end{array}
$$

This is read as: "The element in position 1 moves to position 3: the element in position 2 moves to position 1: etc."

In the validation process, we need to derive such a permutation from a number $k_s$, derived from the key, **k**. Each $k_s$ must correspond to a unique permutation. As can be seen above, the essence of choosing a permutation is to select a rearrangement of the 4 numbers 1, 2, 3, 4. One simple method of choosing would be to write down and number all possible permutations of the numbers 1 to 4, and use $k_s$ to select which permutation is required.

Step 2: Application of Permutation

Using the above permutation, **P,** and a fairly obvious notation, **P** (abcd) = (bdac), **P²** is the notation used to indicate that the permutation **P** has been applied twice. The first application to (abcd) gives (bdac) as above. The second application follows thus:-

P² (abcd) = P(P(abcd)) = P(bdac) = (dcba)

Similarly, P³ (abed) = (cadb) and P⁴ (abed) = (abed)

Concatenating (abcd) and its permutations we obtain the ordered set:- (abcd)(bdac)(dcba)(cadb).

Arranging each set of 4 into a 2x2 square we can arrange the permutations to match the rectangle $r_1$ thus:

a  b  b  d

c  d  a  c

d  c  c  a

b  a  d  b

We can now take the set si to consist of those elements in positions marked with an 'a' and $s_2$ to consist of those sets marked with a 'b'. Thus $s_1$ is the set in bold, underlined type in the first rectangle, below left, and $s_2$ the set in bold, underlined type in the second rectangle, below right.

| | | | | | | | |
|---|---|---|---|---|---|---|---|
| **<u>5</u>** | 8 | 3 | 1 | 5 | **<u>8</u>** | **<u>3</u>** | 1 |
| 4 | 9 | **<u>6</u>** | 6 | 4 | 9 | 6 | 6 |
| 2 | 9 | 7 | **<u>6</u>** | 2 | 9 | 7 | 6 |
| 7 | **<u>2</u>** | 7 | 2 | **<u>7</u>** | 2 | 7 | **<u>2</u>** |

Similarly for $s_3$ and $s_4$.

Stage 4: Modifying Sets

From the key **k**, a set of numbers $k_1$, $k_2$, $k_3$, $k_4$ must be derived for each of the sets $s_1$, $s_2$, $s_3$, $s_4$ in order to enable the validation procedure.

Let us first consider the set $s_1$ and suppose that $k_1$ = 3. The validation procedure requires an arithmetic relationship between members of $s_1$. Suppose that relationship is that the sum of the members of $s_1$ is to be a multiple of $k_1$ (i.e. 3 in this case).

From the above $s_1$ = {5,6,6,2}

Summing, we have 5 + 6 + 6 + 2 = 19.

This is not a multiple of 3. The nearest multiple of 3 is 18. To satisfy the arithmetic relationship we must reduce the total by 1. This will be achieved if we reduce the '5' to a '4'.

Then $s_1$ = {4,6,6,2} and its sum is a multiple of 3 as required.

As similar process is carried out with the set $s_2$, the sum of the numbers being required to be a multiple of $k_2$. Likewise with sets $s_3$, $s_4$ ...

The process is then repeated for each of the rectangles $r_2$, $r_3$,... until the whole image has been modified.

In practice the size of rectangle would be much greater giving far greater choice of sets s, and hence making trial and error methods of detection impossible. If for instance, a set of 8 elements is chosen from 32 elements the number of possible selections is more than 10 million. Further, the elements to be diminished or increased may be chosen to spread evenly through the rectangle.

Detection of Modifications to Validated Images

If it is suspected that an image has been modified, anyone wishing to detect the modification must have knowledge of the key, **k**, which was used in the modification.

The first stage is then to follow the first steps above. That is, the image must be divided into rectangles $r_1$, $r_2$, $r_3$, ..... and from these, for each rectangle, selections $s_1$, $s_2$, $s_3$, $s_4$, must be made, the choice being governed by the key $k$.

For the set $s_1$, the value of $k_1$ must be derived from $k$ and as in the case above, will have the value 3.

The elements of $s_1$ will be summed. If no alteration has been made then the sum will be $4 + 6 + 6 + 2 = 18$ as above. The fact that it is a multiple of 3 suggest that no alteration has been made.

If on the other hand, the '2' in $s_1$ had been changed to a '4', the summation above would become : $4 + 6 + 6 + 4 = 20$. Since this is not a multiple of 3 it would be apparent that a modification of the image had occurred.

The same process is carried out throughout the image.

Clearly in this case there is a high risk that an altered image might by chance satisfy the arithmetic relationship. In real cases the size of rectangle is greater and the values of $k_1$, $k_2$, $k_3$ .... will be greater. In a typical image 3 numbers might be required to describe a pixel so that even if there were to be a one in twenty chance of satisfying the relationship, there would only be a one in eight thousand chance of satisfying the relationship for a whole pixel.

## Claims

1. A method of authenticating a digital data work, to enable any unauthorised alteration to that work to be readily detectable, comprising the steps of:

   dividing the whole or part of the work into sets of data elements and respective sub-sets, with each data element or sub-set of data elements having a measurable characteristic;
   selecting a particular set of data elements and then modifying a pre-determined sub-set of data elements in that set so that the measurable characteristic of that pre-determined sub-set, or the data elements in that sub-set, satisfies a predetermined relation, the measurable characteristic of any sub-set, or the data elements in that sub-set, being measurably changed if any data element of that sub-set is altered.

2. The method of claim 1 comprising the further step of selecting each other set of data elements of the work and then modifying a pre-determined sub-set of data elements in each such set in the manner as defined in claim 1.

3. The method of claim 2 wherein the sub-sets of all the sets of data elements of the work together consist of all the data elements of the work.

4. The method of claim 1 wherein the sub-set of data elements in each set is selected in accordance with an algorithm derivable from a secret key.

5. The method of claim 1 wherein the modification of the data elements in each sub-set is in accordance with an algorithm derivable from a secret key such that the likelihood of the measurable characteristic arising by chance is very low.

6. A method of detecting any alteration of a digital data work, to which the authentication method of claims 1-5 has been applied, comprising the steps of:

   dividing the whole or part of the work into sets of data elements and respective sub-sets, with each data element or sub-set of data elements having a measurable characteristic;
   selecting each particular set of data elements and further selecting a pre-determined sub-set of data elements in each set;
   determining whether the measurable characteristic of that pre-determined sub-set, or the data elements in that sub-set, satisfies a predetermined relation, and issuing a signal if the measurable characteristic of any data element or sub-set does not satisfy that predetermined relation, that signal being indicative of the work having been altered.

7. A digital data work to which the authentication method of any of claims 1-5 has been applied.

8. A computer program operable to authenticate a digital data work comprising computer program code means adapted to perform all the steps of the method defined in any of Claims 1 to 5.

9. A computer program operable to detect any alteration to a digital data work, to which the authentication method of claims 1-5 has been applied, comprising computer program code means adapted to perform all the steps of the method defined in claim 6.

**10.** Digital media pre-recorded with a computer program as defined in either claim 8 or claim 9.

**Patentansprüche**

**1.** Verfahren zur Authentifizierung einer digitalen Datenarbeit, das es ermöglicht, unbefugte Änderungen dieser Arbeit einfach erkennen zu können, einschließlich folgender Schritte:

Unterteilung der gesamten oder Teil der Arbeit in Datenelementsätze und entsprechende Datenelement-Untersätze, wobei jedes Datenelement oder jeder Datenelement-Untersatz über eine meßbare Eigenschaft verfügt;
Auswahl eines speziellen Datenelementsatzes und anschließende Abänderung eines vorbestimmten Datenelement-Untersatzes in diesem Satz, so daß die meßbare Eigenschaft dieses vorbestimmten Untersatzes oder die Datenelemente in diesem Untersatz, eine vorbestimmte Beziehung befriedigen, wobei die meßbare Eigenschaft eines jeden Untersatzes oder der Datenelemente in diesem Untersatz, meßbar verändert werden, falls irgendein Datenelement diese Untersatzes geändert wird.

**2.** Verfahren gemäß Anspruch 1, einschließlich des weiteren Schrittes der Auswahl jedes zweiten Datenelementsatzes der Arbeit und folglicher Abänderung eines vorbestimmten Datenelement-Untersatzes in jedem dieser Sätze in der in Anspruch 1 beschriebenen Art und Weise.

**3.** Verfahren gemäß Anspruch 2, wobei die Untersätze aus allen Datenelementsätzen der Arbeit zusammen aus allen Datenelementen der Arbeit bestehen.

**4.** Verfahren gemäß Anspruch 1, wobei die Datenelement-Untersätze in jedem Satz gemäß einem Algorithmus gewählt werden, der aus einem geheimen Schlüssel abgeleitet wird.

**5.** Verfahren gemäß Anspruch 1, wobei die Abänderung der Datenelemente in jedem Untersatz gemäß einem Algorithmus gewählt wird, der aus einem geheimen Schlüssel abgeleitet wird, so daß nur eine äußerst geringe Chance besteht, daß die meßbare Eigenschaft sich zufällig ergibt.

**6.** Verfahren zur Erkennung jeglicher Abänderungen einer digitalen Datenarbeit bei der das Authentifizierungsverfahren gemäß den Ansprüchen 1-5 angewandt wurde, einschließlich der folgenden Schritte:

Unterteilung der gesamten oder Teil der Arbeit in Datenelementsätze und entsprechende Datenelement-Untersätze, wobei jedes Datenelement oder jeder Datenelement-Untersatz über eine meßbare Eigenschaft verfügt;
Auswahl eines speziellen Datenelementsatzes und weitere Auswahl eines vorbestimmten Datenelement-Untersatzes in jedem Satz;
Ermittlung, ob die meßbare Eigenschaft des vorbestimmten Untersatzes oder der Datenelemente in diesem Untersatz eine vorbestimmte Beziehung befriedigen und Ausgabe eines Signals, falls die meßbare Eigenschaft irgendeines Datenelements oder Untersatzes die vorbestimmte Beziehung nicht befriedigt, wobei das Signal anzeigt, daß die Arbeit geändert wurde.

**7.** Digitale Datenarbeit bei der das Authentifizierungsverfahren gemäß den Ansprüchen 1-5 angewandt wurde.

**8.** Computerprogramm zur Authentifizierung einer digitalen Datenarbeit gemäß dem in Ansprüchen 1 bis 5 definierten Verfahren.

**9.** Computerprogramm zur Erkennung jeglicher Abänderung einer digitalen Datenarbeit bei der das Authentifizierungsverfahren gemäß den Ansprüchen 1-5 angewandt wurde, bei Einsatz des in Anspruch 6 definierten Verfahrens.

**10.** Digitale Medien, die mit einem wie in Anspruch 8 und 9 definierten Computerprogramm vorab aufgenommen wurden.

**Revendications**

1.  Une méthode de validation d'un ouvrage comportant des données numériques, pour permettre la détection facile de tout remaniement non autorisé de cet ouvrage, comprenant les étapes suivantes:

    la division de la totalité ou d'une partie de l'ouvrage en ensembles de données et sous-ensembles respectifs, chaque donnée ou sous-ensemble de données ayant une caractéristique mesurable;
    la sélection d'un ensemble particulier de données, puis la modification d'un sous-ensemble prédéterminé de données dans cet ensemble de façon à ce que la caractéristique mesurable de ce sous-ensemble prédéterminé, ou des données dans ce sous-ensemble, satisfasse un rapport prédéterminé, la caractéristique mesurable de tout sous-ensemble, ou des données dans ce sous-ensemble, étant mesurablement changée si toute donnée de ce sous-ensemble est remaniée.

2.  La méthode de la revendication 1 comprenant l'étape supplémentaire de la sélection de chaque autre ensemble de données de l'ouvrage, puis de la modification d'un sous-ensemble prédéterminé de données dans chacun de ces ensembles de la manière définie dans la revendication 1.

3.  La méthode de la revendication 2 dans quoi les sous-ensembles de tous les ensembles de données de l'ouvrage constituent ensemble toutes les données de l'ouvrage.

4.  La méthode de la revendication 1 dans quoi le sous-ensemble de données dans chaque ensemble est sélectionné conformément à un algorithme dérivable d'une clé secrète.

5.  La méthode de la revendication 1 dans quoi la modification des données dans chaque sous-ensemble est conforme à un algorithme dérivable d'une clé secrète de sorte qu'il est très peu probable que la caractéristique mesurable se présente par hasard.

6.  Une méthode de détection de tout remaniement d'un ouvrage comportant des données numériques, auquel la méthode de validation des revendications 1-5 a été appliquée, comprenant les étapes suivantes:

    la division de la totalité ou d'une partie de l'ouvrage en ensembles de données et sous-ensembles respectifs, chaque donnée ou sous-ensemble de données ayant une caractéristique mesurable;
    la sélection de chaque ensemble particulier de données, et la sélection supplémentaire d'un sous-ensemble de données prédéterminé dans chaque ensemble;
    la détermination si la caractéristique mesurable de ce sous-ensemble prédéterminé, ou des données dans ce sous-ensemble, satisfait un rapport prédéterminé, et l'émission d'un signal si la caractéristique mesurable de toute donnée ou sous-ensemble ne satisfait pas ce rapport prédéterminé, ce signal indiquant que l'ouvrage a été remanié.

7.  Un ouvrage comportant des données numériques auquel la méthode de validation de l'une quelconque des revendications 1-5 a été appliquée.

8.  Un programme informatique utilisable pour valider un ouvrage comportant des données numériques à l'aide de la méthode définie dans l'une quelconque des revendications 1 à 5.

9.  Un programme informatique utilisable pour détecter tout remaniement d'un ouvrage comportant des données numériques, auquel la méthode de validation des revendications 1-5 a été appliquée, à l'aide de la méthode définie dans la revendication 6.

10. Des supports numériques pré-enregistrés avec un programme informatique comme défini dans la revendication 8 ou la revendication 9.